# DEMANDE DE BREVET EUROPEEN

(11) **EP 1 631 086 A1**
(43) Date de publication de la demande: **01.03.2006**
(21) Numéro de dépôt: 04292108.0
(22) Date de dépôt: 30.08.2004
(51) Int. Cl.: H04N 7/167

(54) **Méthode de composition de messages de sécurité pour contenu encrypté**

(71) Demandeur: Nagra France Sarl, 75015 Paris (FR)
(72) Inventeur: Fichet, Laurent, 78320 Le Mesnil Saint Denis (FR); Piquet, Mathieu, 75002 Paris (FR)
(74) Mandataire: Wenger, Joel-Théophile

(57) **Abrégé**

Le but de la présente invention est de proposer une méthode pour empêcher un utilisateur de bloquer la transmission de messages d'autorisation dans un système d'accès conditionnel à un contenu tel qu'un contenu de télévision à péage. Ce système utilise des messages de contrôle ECM et des messages de gestion EMM.

Ce but est atteint par une méthode de composition de messages de sécurité accompagnant un contenu encrypté par des mots de contrôle CW, ces messages comprenant un premier bloc encrypté par une clé de transmission CT incluant au moins le mot de contrôle CW, caractérisé en ce qu'il comprend un second bloc, encrypté par une clé système, comprenant des données de gestion et la clé de transmission.

## Description

La présente invention concerne le domaine de la télévision à péage, en particulier la gestion des clés d'encryption d'un contenu.

Afin de s'assurer qu'un contenu ne puisse être accessible que par les ayants-droits, le flux numérique de données transmis vers le récepteur/décodeur est chiffré afin de pouvoir en contrôler l'utilisation et de définir des conditions pour une telle utilisation. Ce chiffrement est réalisé grâce à des mots de contrôle (Control Words) qui sont changés à intervalle régulier (typiquement entre 5 et 30 secondes, bien que des intervalles nettement plus longs puissent être utilisés) afin de dissuader toute attaque visant à retrouver un tel mot de contrôle.

Pour que le récepteur (ou unité d'utilisateur) puisse déchiffrer le flux chiffré par ces mots de contrôle, ces derniers lui sont envoyés indépendamment du flux dans des messages de contrôle (ECM) chiffrés par une clé propre au système de transmission (clé de transmission CT) entre un centre de gestion et un module de sécurité de l'unité d'utilisateur. En effet, les opérations de sécurité sont effectuées dans un module de sécurité (SC) qui est généralement réalisé sous la forme d'une carte à puce, réputée inviolable. La clé de transmission servant à encrypter les messages de contrôle, est commune à tous les modules de sécurité et est changée régulièrement. Elle peut être de type symétrique ou asymétrique selon l'implémentation.

Le module de sécurité peut être soit de type amovible soit directement intégré à l'unité d'utilisateur (circuit BGA par exemple).

Lors du déchiffrement d'un message de contrôle (ECM), il est vérifié, dans le module de sécurité (SC), que le droit pour accéder au flux considéré est présent. Ce droit peut être géré par des messages d'autorisation (EMM) qui chargent un tel droit dans le module de sécurité et permet également de changer la clé de transmission CT qui est utilisée pour déchiffrer les messages ECM.

Les divers éléments décrits ci-dessus sont illustrés dans le document "Functional Model of a Conditional Access System", EBU Technical Review Winter 1995, référence XP 000559450.

Pour la suite de l'exposé, on appellera "contenu" un contenu vidéo, audio (par exemple MP3) ou données (programme de jeu par exemple) qui est chiffré selon la méthode connue des mots de contrôle, chaque événement pouvant être chiffré par un ou plusieurs mots de contrôle, chacun ayant une durée de validité déterminée.

La clé de transmission CT est généralement commune à tous les messages ECM quel que soit le canal diffusé. En général, elle change régulièrement. Du fait que, dans de nombreux cas, l'unité d'utilisateur ne dispose pas de voie de retour, il est nécessaire de répéter chaque message durant plusieurs jours afin de s'assurer que chaque unité d'utilisateur ait eu la possibilité de le recevoir.

C'est pourquoi, certaines personnes mal-intentionnées placent un filtre sur les messages destinés au module de sécurité pour supprimer certains messages EMM. En effet, ces messages mettent à jour les droits, modifient le profil de l'utilisateur, voire intègrent de nouvelles fonctions de sécurité.

C'est pourquoi, le but de la présente invention est de proposer une méthode pour empêcher un utilisateur de bloquer la transmission des messages d'autorisation EMM.

Ce but est atteint par une Méthode de composition de messages de sécurité accompagnant un contenu encrypté par des mots de contrôle, ces messages comprenant un premier bloc encrypté par une clé de transmission incluant au moins le mot de contrôle, caractérisée en ce qu'elle consiste à ajouter un second bloc, encrypté par une clé système, comprenant la clé de transmission.

Ainsi, selon l'invention, le message mixte ECM/EMM contenant le mot de contrôle CW contient également les données de gestion du module de sécurité. De ce fait, si un tiers souhaite éliminer le message d'autorisation, il doit nécessairement supprimer un message contenant le mot de contrôle CW avec comme conséquence immédiate, que le contenu encrypté ne pourra être accessible en clair.

La clé de transmission CT peut changer aussi souvent que l'on souhaite et peut dorénavant être spécifique pour chaque canal.

Il est à noter qu'il n'est pas nécessaire que chaque message soit de type mixte. Une fois qu'un message mixte est reçu, la clé de transmission CT propre à ce canal peut être mémorisée dans le module de sécurité. Les autres messages contenant le mot de contrôle peuvent être de type conventionnel.

Il est précisé ici que la notion de mot de contrôle regroupe les deux manières connue de générer une telle clé. Ces deux manières sont décrites dans la demande non publiée EP01402667.5. La première consiste à générer un nombre aléatoire et l'utiliser comme mot de contrôle. Ce mot est transmis dans le message ECM sous forme encryptée avec les conditions d'accès. La seconde méthode consiste à générer un nombre aléatoire et l'associer avec les conditions d'accès par une fonction unidirectionnelle de type Hash. C'est le résultat de cette fonction qui est utilisé pour l'encryption du contenu. Parallèlement, le nombre aléatoire et les conditions d'accès sont transmis à l'unité d'utilisateur. La même fonction unidirectionnelle est effectuée dans le module de sécurité de ladite unité d'utilisateur pour retrouver la clé qui a encrypté le contenu. Bien que la suite de la description fasse référence à la notion "mot de contrôle", il est entendu que cela regroupe ces deux manières de générer une clé d'encryption du contenu.

L'invention sera mieux comprise grâce à la description détaillée qui va suivre et qui se réfère aux dessins annexés qui sont donnés à titre d'exemple nullement limitatif, à savoir:
- la figure 1 illustre un schéma type de transmission de contenu encrypté par mots de contrôle tel que connu dans l'état de la technique,
- les figures 2a et 2b illustrent la structure d'un message mixte,

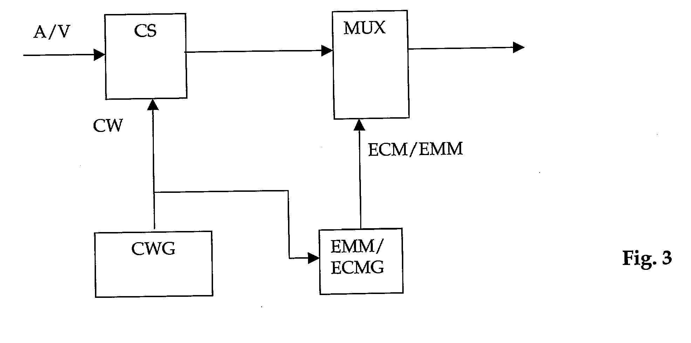

- la figure 3 illustre la génération d'un message mixte.

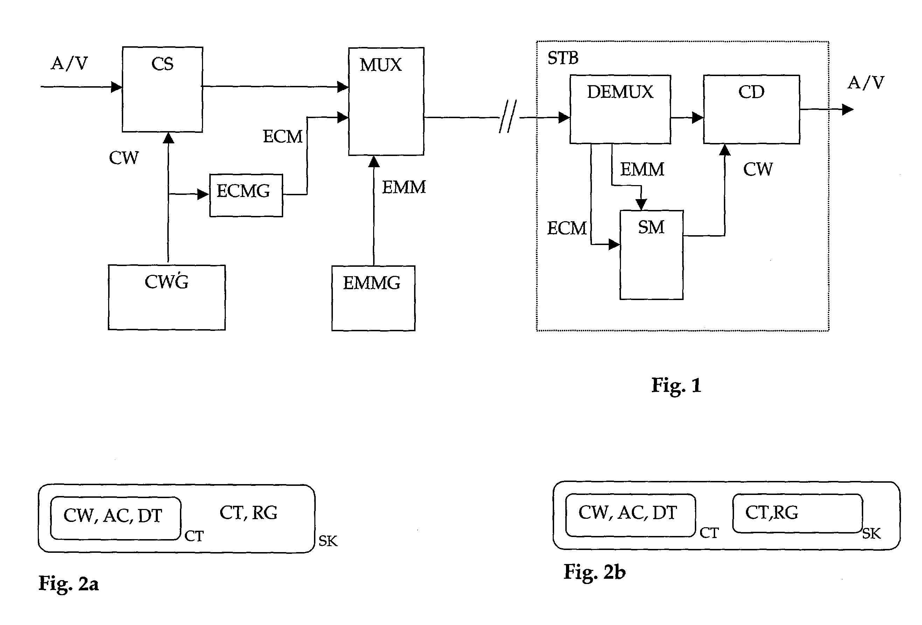

Sur la figure 1, le signal audio/vidéo A/V provenant d'une source de diffusion tel qu'un vidéo serveur, est transmise au module d'encryption CS (Common Scrambling). Ce module est alimenté par des mots de contrôle CW généré par un générateur de mots de contrôle CWG. Le principe est basé sur l'encryption d'une portion du flux A/V par un mot de contrôle CW jusqu'à que ce mot soit changé. Parallèlement, le mot de contrôle est fourni à un générateur de messages ECMG qui est en charge de composer un message de contrôle ECM. Ce message se compose généralement du mot de contrôle CW, des conditions AC à remplir pour retourner ce mot au décodeur STB et d'une date DT relative à la diffusion du contenu. Comme indiqué plus haut, ces éléments sont encryptés par une clé de transmission CT.

Cette clé est transmise dans un message d'autorisation EMM qui est généré par un générateur de messages EMMG. Ce message est encrypté par une clé système SK, considérée d'un niveau de sécurité élevé.

Le multiplexeur MUX regroupe tous les signaux et les transmet aux équipements de diffusion. La diffusion peut de faire de nombreuses manières tels que par ondes hertziennes, par câble, par satellite, par Internet (multicast ou unicast).

Du côté de la réception, l'unité d'utilisateur STB filtre les signaux reçus dans un filtre DEMUX pour en extraire les messages destinés au module de sécurité SM. Ces messages ECM et EMM sont acheminés vers le module de sécurité SM et traités grâce aux clés contenues dans ce module.

Si le module de sécurité SM contient les droits nécessaires et donc que les conditions AC contenues dans le message ECM sont remplies, le module de sécurité renvoie le mot de contrôle CW au décodeur. Cette clé est transmise au module de décryption CD qui permet de restituer le signal A/V en clair.

La figure 2a illustre une première variante d'un message mixte selon l'invention. Ce message comprend une partie propre au message de contrôle ECM (premier bloc) et une partie propre au message d'autorisation EMM (second bloc). Les données de contrôle tels que le mot de contrôle CW, les conditions d'accès AC et la date DT sont encryptés par la clé de transmission CT. Le générateur de message ECM/EMMG ajoute au premier bloc ainsi formé le second bloc comprenant les données de gestion RG et la clé de transmission CT. L'ensemble du message est encrypté par la clé système SK tel qu'illustré à la figure 2a.

Selon la variante de la figure 2b, le premier bloc comprenant les données d'un message ECM est encrypté uniquement par la clé de transmission CT et le second bloc est encrypté uniquement par la clé système.

Lors de la réception, le filtre DEMUX extrait les messages à destination du module de sécurité SM. Un tel message est donc premièrement décrypté par la clé système SK qui permet d'en extraire la clé de transmission CT. Les données de gestion RG sont également reçues par le module de sécurité qui les traite selon leur nature. La clé de transmission CT ainsi connue, il est possible de décrypter le bloc correspondant à un message ECM.

Il est à noter que la clé système SK peut être de différentes natures. Cette clé peut être une clé commune à tous les modules de sécurité ou, au contraire, une clé spécifique par module de sécurité. En effet, dans un univers Internet, la diffusion se fait entre deux points c'est-à-dire que le diffuseur connaît l'identité du destinataire. Il est donc possible de rechercher dans une base de clés, la clé système qui s'applique à ce destinataire.

Comme indiqué plus haut, une fois la clé de transmission reçue, elle peut être utilisée pour la réception et la décryption d'un grand nombre de message ECM.

## Revendications

1. Méthode de composition de messages de sécurité accompagnant un contenu encrypté par des mots de contrôle (CW), ces messages comprenant un premier bloc encrypté par une clé de transmission (CT) incluant au moins le mot de contrôle (CW), **caractérisée en ce qu'**elle consiste à ajouter un second bloc, encrypté par une clé système (SK), comprenant la clé de transmission (CT).

2. Méthode selon la revendication 1, **caractérisée en ce qu'**elle consiste à ajouter au second bloc des données de gestion (RG).

3. Méthode selon la revendication 1 ou 2, **caractérisée en ce qu'**elle consiste à encrypter, par la clé système (SK), le second bloc et le premier bloc encrypté par la clé de transmission (CT).

4. Méthode selon les revendications 1 à 3, **caractérisée en ce que** le premier bloc contient les conditions d'accès (AC) au contenu.

5. Méthode selon les revendications 1 à 3, **caractérisée en ce que** le premier bloc contient une date courante (DT) relative à la diffusion du contenu.
